# EUROPEAN PATENT SPECIFICATION

(11) **EP 2 809 067 B1**
(45) Date of publication and mention of the grant of the patent: **21.12.2016**
(21) Application number: 12866494.3
(22) Date of filing: 25.01.2012
(51) Int. Cl.: H04N 5/64, G06F 1/16, G06F 1/18, G09F 9/00

(54) **DISPLAY SYSTEM, ATTACHMENT AND DISPLAY UNIT**
ANZEIGESYSTEM, BEFESTIGUNG UND ANZEIGEEINHEIT
SYSTÈME D'AFFICHAGE, POINT DE RACCORDEMENT ET MODULE D'AFFICHAGE

(43) Date of publication of application: 03.12.2014
(73) Proprietor: Panasonic Corporation, Kadoma-shi, Osaka 571-8501 (JP)
(72) Inventor: SHINOHARA, Shinichi, Osaka 540-6207 (JP); MIYAKE, Kumiko, Osaka 540-6207 (JP)
(74) Representative: Grünecker Patent- und Rechtsanwälte PartG mbB
(86) International application number: PCT/JP2012/000468
(87) International publication number: WO 2013/111190

(56) References cited:
- JP-A- H11 233 964
- JP-A- 2001 094 272
- JP-A- 2001 094 272
- JP-A- 2003 288 565
- JP-A- 2007 250 926

## Description

### TECHNICAL FIELD

The present invention relates to a display system. More particularly, the present invention relates to a display system which includes a display device and an attachment and which uses an external terminal device for the display device by inserting the external terminal device into the attachment.

### BACKGROUND ART

Some of conventional display devices can have their functions extended by connecting an external terminal device thereto. Examples of such external terminal devices to be connected to display devices include cards with an IC to decode an encrypted broadcast signal, storage media, and communications modules.

For example, in the display device disclosed in Patent Document No. 1, its internal board has a slot through which an external terminal device can be inserted. JP 2003 288565 A relates to a memory unit and a mobile equipment using the same.

### CITATION LIST

### PATENT LITERATURE

Patent Document No. 1: Japanese Laid-Open Patent Publication No. 2007-250926

### SUMMARY OF INVENTION

### TECHNICAL PROBLEM

According to the conventional technologies, however, either such a slot through which an external terminal device is inserted or the external terminal device itself will take up so much space on the board that it is difficult to design the display device easily or cut down the cost, which is a problem.

More specifically, according to the conventional technologies, most of the external terminal device is supposed to be housed in the display device, and therefore, a space (such as a slot) for housing the external terminal device should be left on the board of the display device.

Basically, however, it is the user who decides whether or not he or she would like to use an external terminal device. That is to say, even if such a space for housing an external terminal device is left on the board, no external terminal devices would be used at all in some cases. In such a situation, the space left on the board for external terminal devices would be useless. If such a space which has been left on the board for external terminal devices could be eliminated, then the design process would be done more easily and the cost could be cut down.

The present inventors perfected our invention in order to overcome such a problem by providing a display system in which no such space for housing an external terminal device is left on the board of a display device.

### SOLUTION TO PROBLEM

This display system according to the present invention is defined in claim 1.

When the external terminal device is attached to the display device via the attachment, the first and second interfaces of the attachment may be connected to the connector and the external terminal device, respectively, substantially parallel to the display screen of the display panel.

The level difference portion may project perpendicularly to the display screen of the display panel.

That surface may also intersect with a vertical direction at substantially right angles.

The connector may have a hole which faces vertically upward.

That surface may be arranged in the vicinity of the outer periphery of the back cover.

The back cover may define at least one of the upper, lower and side surfaces of the display device, and the connector may be arranged on the at least one surface.

The attachment may have a U-shape.

The first interface may include a terminal to be inserted into the connector and at least one guide to locate where to insert the terminal into the connector.

An attachment according to the present invention is defined in claim 9.

A display device according to the present invention is defined in claim 10.

### ADVANTAGEOUS EFFECTS OF INVENTION

In a display system according to the present invention, an attachment to connect an external terminal device is connected to the back cover of a display device via a connector which is arranged in the level difference portion of the back cover. In this manner, the external terminal device can be connected to the display device. Thus, if a space to mount the connector is left on the display device end by adopting such a configuration, the external terminal device can be connected there and the design process can be done more easily and the cost can be cut down.

### BRIEF DESCRIPTION OF DRAWINGS

[FIG. **1**] A front view of a display device **100** according to a first embodiment of the present invention.
[FIG. **2**] A rear view of the display device **100.**
[FIG. **3**] Illustrates a display system **10** in which an external terminal device **204** has been attached to the display device **100** via an attachment **203.**
[FIG. **4**] Illustrates an internal configuration on the rear side of the display device **100** of the display system **10** according to the first embodiment.
[FIG. **5**] A partial enlarged view of a connector **205.**
[FIG. **6**] An enlarged view of the attachment **203** according to the first embodiment.
[FIG. **7**] A cross-sectional view of the attachment **203** as viewed on the plane **A-A** (shown in FIG. **6**).
[FIG. **8A**] A cross-sectional view illustrating where the attachment **203** on the verge of being inserted into the display device **100** is positioned.
[FIG. **8B**] A cross-sectional view illustrating where the attachment **203** is positioned with respect to the display device **100** when fixed on the connector **205.**
[FIG. **9**] A rear view of a display device **110** according to a second embodiment.
[FIG. **10**] Illustrates the display device **110** in which the attachment **203** with the external terminal device **204** already inserted has been fit into the connector **205.**
[FIG. **11A**] A cross-sectional view of the display device **110** as viewed on the plane **B-B** (shown in FIG. **9**).
[FIG. **11B**] A cross-sectional view illustrating where the attachment **203** on the verge of being inserted into the display device **110** is positioned.
[FIG. **11C**] A cross-sectional view illustrating where the attachment **203,** of which the fitting portion **301** has been inserted into the connector **205,** is located with respect to the display device **110.**
[FIG. **12**] Illustrates an example in which the connector **205** is arranged on the back cover **201** that defines the upper surface of the display device.

### DESCRIPTION OF EMBODIMENTS

Hereinafter, embodiments of a display system, display device, external terminal device and attachment according to the present invention will be described with reference to the accompanying drawings.

### (EMBODIMENT 1)

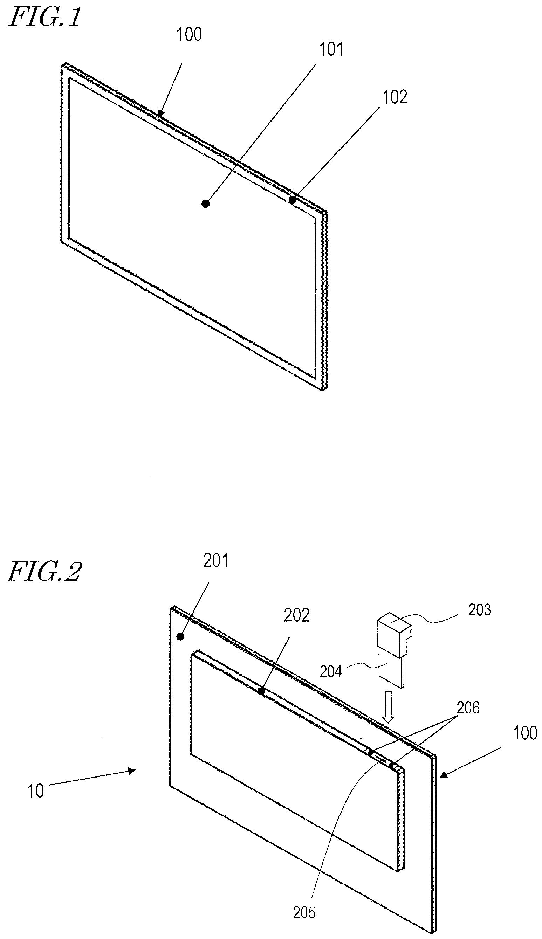

First of all, a configuration for a display system according to a first embodiment will be described with reference to FIGS. **1** through **8B****.**

This display system includes a display device, an external terminal device, and an attachment to connect the display device and the external terminal device together. According to this embodiment, the space to house the external terminal device is not left in the display device. However, a connector to which the attachment is inserted is arranged on the back cover for a user who wants to use an external terminal device.

According to this embodiment, the external terminal device is attached to the display device **100** via the attachment. The connector to which the attachment is inserted is arranged at a position on the display device where the user can insert the attachment easily, e.g., at a level difference portion of the back cover or on any of the upper, lower and side surfaces of the display device when the back cover is attached to the display device.

Also, if the attachment is configured in substantially a U-shape, the user can fit the attachment into the display device easily and securely by hooking the attachment onto the display device, so to speak.

FIG. **1** is a front view of a display device **100** according to this embodiment.

The display device **100** includes a display panel **101** and a front panel **102.**

The display device **100** converts either a broadcast signal or data stored in an external storage medium into a video signal and displays the video signal on itself. Examples of the display devices **100** include a TV receiver and a general-purpose display.

The display panel **101** displays video represented by the video signal. Specifically, the display panel **101** may be a plasma display panel, an LCD panel or an organic EL panel, for example.

The front panel **102** is a frame to hold the display panel **101,** and may be made of either a resin or metallic material.

FIG. **2** is a rear view of the display device **100,** which includes a back cover **201.**

The back cover **201** covers the back surface of the display panel **101.** The back cover **201** is combined with the front panel **102** to hold the display panel **101,** and may be made of a resin or metallic material.

The back cover **201** has a level difference portion **202.** If the direction indicated by the arrow shown in FIG. **2** is supposed to be a vertically downward direction, the level difference portion **202** rises substantially perpendicularly to the vertical direction. Or it can also be said that the level difference portion **202** rises substantially perpendicularly to the principal plane that defines the back cover **201.** In this description, the "principal plane" refers herein to a plane which is formed by the four sides of the back cover **201** illustrated in FIG. **2****.**

It should be noted that the shape of the back cover **201** illustrated in FIG. **2** is just an example. And the back cover **201** could have a warped shape or any of various other shapes. That is why in some cases, the "principal plane" could not be defined definitely. On the other hand, the display screen of the display panel **101** is generally a planar one as shown in FIG. **1****.** For that reason, in this description, the position of the level difference portion **202** or any other portion is sometimes defined with respect to the display panel **101.** For example, the level difference portion **202** projects substantially perpendicularly to the display screen of the display panel **101,** or projects rearward in the depth direction, supposing the display panel **101** defines the front.

In the level difference portion **202** of the back cover **201,** arranged is a connector **205** to which the attachment **203** is connected. The attachment **203** is inserted into the connector **205** substantially parallel to the display screen of the display panel **101.** An external terminal device **204** is fit into the attachment **203.** There are two guide holes **206** near the connector **205.** As will be described later, insert guides of the attachment **203** are inserted into the two guide holes **206.**

In this embodiment, the external terminal device **204** is supposed to have a card shape compliant with the PCMCIA standard, and may be a CI module (CI card) for use to receive a digital telecast in the European district.

The external terminal device **204** has the function of decoding an encrypted broadcast signal that has been received by the display device **100** as will be described in detail later.

In FIG. **2****,** illustrated is the attachment **203** to which the external terminal device **204** has already been inserted. In this description, the display device **100,** the external terminal device **204,** and the attachment **203** to attach the external terminal device **204** to the display device **100** will be sometimes collectively referred to herein as a "display system **10".**

The back cover **201** may have any configuration as long as the back cover **201** defines at least a part of the back surface of the display device **100** and as long as the attachment **203** can be connected to the back cover **201.** For example, the back cover **201** does not always have to be combined with the front panel **102.**

When viewed from the front of the display panel **101,** the level difference portion **202** projects rearward in the depth direction. In this embodiment, the level difference portion **202** and the back cover **201** are made of the same material. However, the level difference portion **202** may have any other configuration as long as the level difference portion **202** projects from the principal plane of the back cover **201.** For example, the back cover **201** itself may be flat and another cover including the level difference portion **202** may be connected to the back cover **201.**

The attachment **203** is connected to the connector which is arranged in the level difference portion **202.**

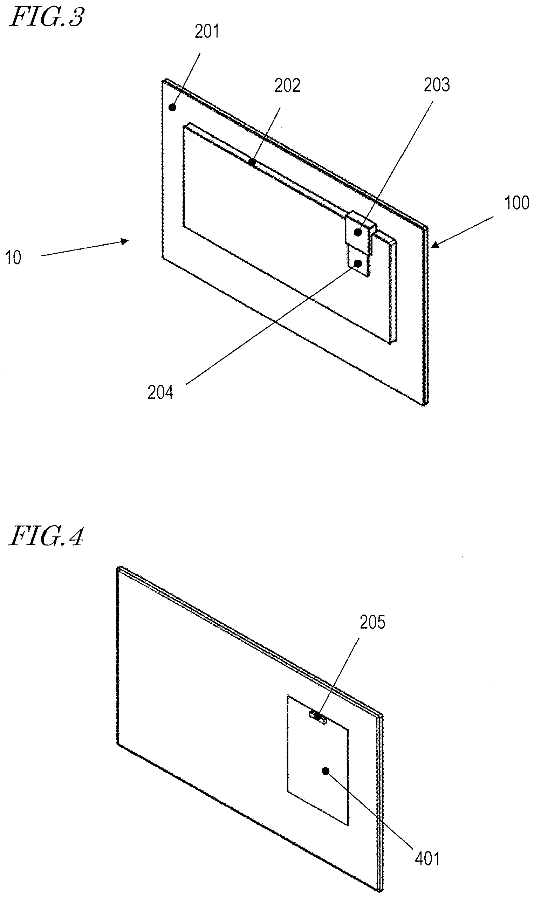

FIG. **3** illustrates a display system **10** in which the external terminal device **204** has been attached to the display device **100** via the attachment **203.** As described above, the attachment **203** has been inserted into the connector **205** (see FIG. **2**) that is arranged in the level difference portion **202** of the back cover **201** substantially parallel to the display screen of the display panel **101.** This will be described in further detail later.

FIG. **4** illustrates an internal configuration on the rear side of the display device **100** of the display system **10** according to this embodiment. Specifically, what is illustrated in FIG. **4** with the back cover **201** removed is the rear side of the display device **100.** Inside the rear side of the display device **100,** there is a board **401** on which the connector **205** is mounted. Also mounted on the board **402** is an electric circuit to process an electrical signal supplied from the connector **205.**

As shown in FIG. **4****,** no space to house the external terminal device **204** is left on the board **401.** By providing only the connector **205** for the external terminal device without leaving such a space, this configuration contributes to cutting down the size of the board **401.**

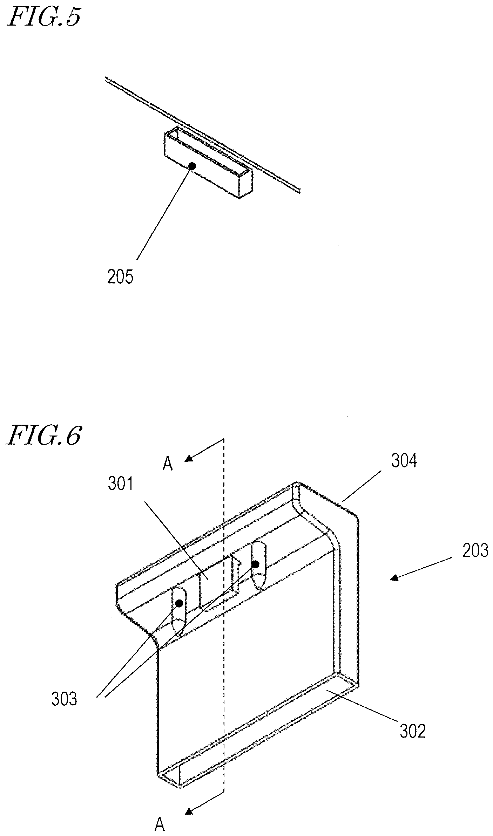

FIG. **5** is a partial enlarged view of the connector **205.** The connector **205** is positioned so as to present itself on the level difference portion **202** through the hole of the back cover **201** when the back cover **201** is attached to the display device **100.**

FIG. **6** is an enlarged view of the attachment **203** according to this embodiment.

This attachment **203** includes a fitting portion **301** which functions as a first interface, an external terminal device slot **302** which functions as a second interface, insert guides **303,** and a bridge portion **304.**

The fitting portion **301** is inserted into the connector **205,** and is comprised of a plurality of insert members. By inserting the fitting portion **301** into the slot of the peripheral portion **202,** the attachment **203** can be fixed onto the display device **100.**

Into the external terminal device slot **302,** the external terminal device **204** is fit. By fitting the external terminal device **204** into the external terminal device slot **302,** the external terminal device **204** can be fixed onto the attachment **203.** When connected to the external terminal device slot **302,** part of the external terminal device **204** gets electrically conductive with the fitting portion **301.** In this manner, the external terminal device **204** gets connected to the display device **100** to form a circuit together. That is to say, the display device **100** is now ready to use the functions of the external terminal device **100.**

The orientation of the external terminal device slot **302** is defined so that when the attachment **203** is fixed onto the display device **100,** the external terminal device **204** that has been fit into the external terminal device slot **302** becomes parallel to the fitting portion **301.**

The insert guides **303** function as guides when the fitting portion **301** is inserted into the connector **205.** In this embodiment, the insert guides **303** are fit into the guide holes **206** (see FIG. **2**) which are arranged near the connector **205.** The insert guides **303** also have the function of keeping the fitting portion **301** and the connector **205** connected so that once fit into the connector **205,** the fitting portion **301** will not get disconnected from the connector **205.** For example, the insert guides **303** are positioned so as to contact with the inner peripheral surfaces of the connector **205** when the fitting portion **301** is inserted into the connector **205.** In this manner, the connector **205** can be secured with the fitting portion **301** and the insert guides **303** and the fitting portion **301** will not get disconnected from the connector **205** easily.

The insert guides **303** are arranged parallel to the direction in which the board **401** (see FIG. **4**) that forms part of an electronic device expands. As a result, the influence on the thickness of the housing of the display device **100** can be minimized. The insert guides **303** may have any of various other configurations. But the configuration shown in FIG. **6** can also contribute to reducing the thickness of the display device **100.**

Furthermore, the insert guides **303** of this embodiment are configured to protect the fitting portion **301.** For example, the insert guides **303** may be longer than, or arranged outside of, the fitting portion **301.** In this description, if something is arranged outside of something else, then it means herein that the former is arranged on the bridge portion **304** opposite from the external terminal device slot **302** with respect to the latter. By adjusting the shape or positions of the insert guides **303** as described above, even if the user happened to bring the attachment **203** into contact with any other object or drop it by mistake, the insert guides **303** would hit the object or the floor earlier. As a result, the fitting portion **301** with a delicate structure can be protected.

In this embodiment, two insert guides **303** are supposed to be provided. However, any other number of insert guides **303** may be provided as long as there is at least one insert guide **303.** Furthermore, it is not absolutely necessary to provide such insert guides in the first place.

The bridge portion **304** physically connects the fitting portion **301,** the insert guides **304** and the external terminal device slot **302** together. In addition, the bridge portion **304** electrically connects the fitting portion **301** and the external terminal device slot **302** together, too.

Due to the presence of this bridge portion **304,** the attachment **203** has a substantially U-cross section.

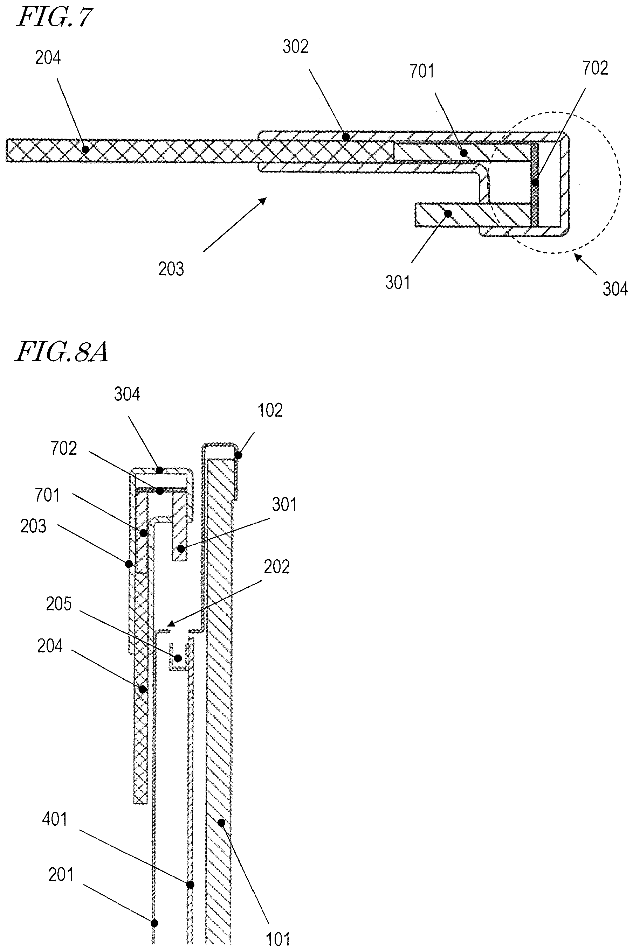

FIG. **7** is a cross-sectional view of the attachment **203** as viewed on the plane **A-A** (shown in FIG. **6** ). For your reference, the external terminal device **204** that has been inserted into the external terminal device slot **302** is also shown in FIG. **7****.**

The external terminal device **204** is connected to a group of terminals **701** of the attachment **203** and electrically connected to the fitting portion **301** through a line **702** inside the bridge portion **304.**

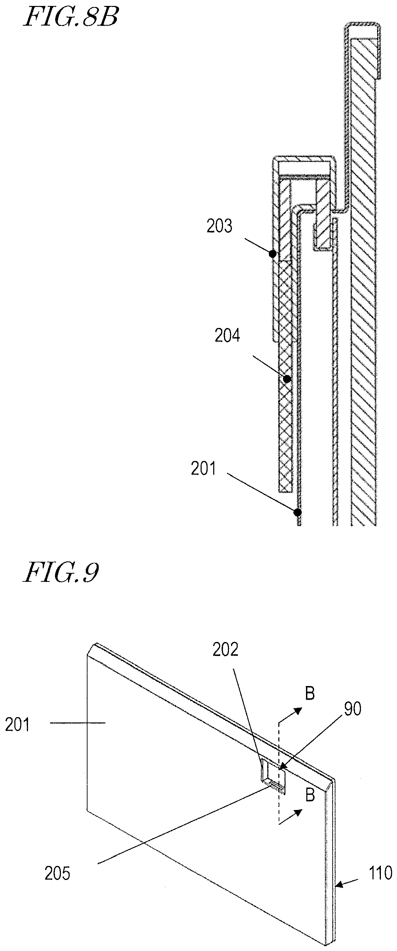

Next, it will be described with reference to FIGS. **8A** and **8B** how to attach the attachment **203** to the display device **100.** Suppose the user has already inserted the external terminal device **204** into the attachment **203.** That is to say, the external terminal device **204** is supposed to be already fixed on the attachment **203.**

FIG. **8A** is a cross-sectional view illustrating where the attachment **203** on the verge of being inserted into the display device **100** is positioned.

First of all, the user moves the attachment **203** on which the external terminal device **204** is fixed along either the back cover **201** or the display panel **101** toward the connector **205.** And he or she inserts the fitting portion **301** into the connector **205.** While inserted and fixed, the attachment **203** can be fixed onto the connector **205** with a portion of the external terminal device **204** and attachment **203** further slid along the back cover **201.**

When the attachment **203** is fixed on the connector **205,** the external terminal device **204** will be located close to the back cover **201** as shown in FIG. **8B****.** However, the external terminal device **204** and the back cover **201** are not located on the same plane but on mutually different planes. The reason is that the bridge portion **304** in substantially a U shape regulates the positions of the fitting portion **301** and the external terminal device slot **302** (i.e., shift them from each other). In this manner, electrical connection is established between them and the display device **100** is now ready to control the external terminal device **204.**

### (EMBODIMENT 2)

FIG. **9** is a rear view of a display device **110** according to a second embodiment. In FIG. **9****,** any component having substantially the same function as its counterpart of the display device **100** of the first embodiment is identified by the same reference numeral and will be referred to by the same name.

In the first embodiment described above, if the display panel defines the front side, a portion of the back cover **201** is supposed to project rearward in the depth direction.

On the other hand, in this embodiment, there is a depressed portion **90** in the back cover **201** of the display device **110.** A plurality of surfaces which forms this depressed portion **90** and which intersects with the display panel at substantially right angles corresponds to the level difference portion **202** of the first embodiment.

In this embodiment, a connector **205** is also arranged in the level difference portion **202.**

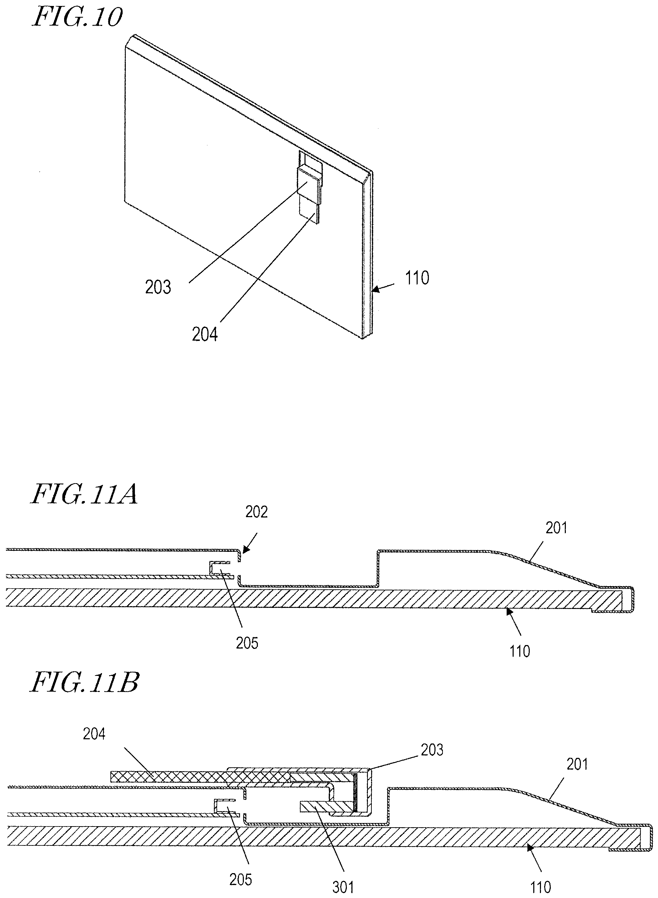

FIG. **10** illustrates the display device **110** in which the attachment **203** with the external terminal device **204** already inserted has been fit into the connector **205.**

Next, it will be described with reference to FIGS. **11A** through **11C** how to attach the attachment **203** onto the display device **110.** As in the first embodiment described above, the external terminal device **204** is supposed to be already fixed on the attachment **203.**

FIG. **11A** is a cross-sectional view of the display device **110** as viewed on the plane **B-B** (shown in FIG. **9**). As can be seen from FIG. **11A****,** there is a connector **205** in the level difference portion **202.**

FIG. **11B** is a cross-sectional view illustrating where the attachment **203** on the verge of being inserted into the display device **110** is positioned.

The user puts the fitting portion **301** of the attachment **203** with the external terminal device **204** already inserted into the depressed portion **90** and moves the attachment **203** along either the back cover **201** or the display panel **101** toward the connector **205.** And he or she inserts the fitting portion **301** into the connector **205.** While inserted and fixed, the attachment **203** can be fixed onto the connector **205** with a portion of the external terminal device **204** and attachment **203** further slid along the back cover **201.**

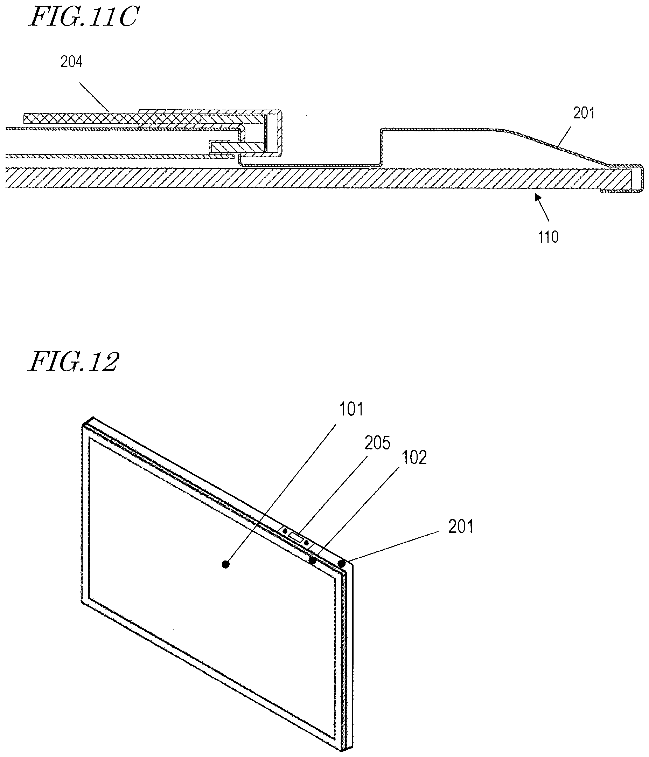

FIG. **11C** is a cross-sectional view illustrating where the attachment **203,** of which the fitting portion **301** has been inserted into the connector **205,** is located with respect to the display device **110.**

When the attachment **203** is fixed on the connector **205,** the external terminal device **204** will be located close to the back cover **201** as shown in FIG. **11C****.** In this manner, electrical connection is established between them and the display device **110** is now ready to control the external terminal device **204.** As already described for the first embodiment, the external terminal device **204** and the back cover **201** are located on mutually different planes for the reason described above.

Embodiments of the present invention are as described above.

According to a conventional structure, to attach an external terminal device **204** to a display device, the user should remove the back cover and attach the electronic device to or around the center of the back surface where the board is arranged. Since it cannot be said that the board can be arranged with a lot of freedom, it has become more and more difficult for the user to access the space reserved for the external terminal device as the size of the display panels becomes bigger and bigger, in particular.

According to this embodiment, however, no space to house any external terminal device is left on the display device **100.** Thus, such a space which has been left on the board for an external terminal device can be cut down. As a result, the design process can get done more easily and the cost can be further cut down.

In addition, according to the configuration of the embodiment just described, a level difference portion on the rear of the display device **110** may be arranged in the vicinity of the outer periphery of the back cover and a connector may be arranged in the level difference portion. As a result, the user can access and find the connector for the external terminal device much more easily.

Furthermore, the attachment is supposed to be connected to the board or back cover of the display device while being slid parallel to the board or the back cover instead of being connected perpendicularly to the board or the back cover. Thus, the user can put weight on the attachment more easily and can handle the attachment more smoothly. For example, suppose a connector with a hole that faces vertically upward is provided in the vicinity of the outer periphery of the back cover of the display device. In that case, the user can insert the attachment while putting weight on the bridge portion vertically downward, and therefore, can insert the attachment very easily. Particularly if the bridge portion of the attachment is at least wide enough for the user to put weight on it easily, then he or she can force the attachment into the connector easily by putting weight onto that bridge portion.

It should be noted that the weight does not always have to be put vertically downward. Alternatively, the display system may also be configured so that the user can put weight laterally or vertically upward.

In the embodiment described above, the connector is supposed to be provided in either the level difference portion or the depressed portion on the rear of the display device. However, this is just an example. For example, FIG. **12** illustrates an example in which the connector **205** is arranged on the back cover **201** that defines the upper surface of the display device. The hole of this connector **205** faces vertically upward in this case. In FIG. **12****,** the display panel **101** and front panel **102** are also shown for your reference. As can be seen from FIG. **12****,** neither a level difference portion nor a depressed portion is provided on the back cover **201** in this example.

The connector **205** does not have to be arranged on the upper surface of display device. Rather, the connector **205** may be arranged on at least one of the upper, lower and side surfaces thereof.

### INDUSTRIAL APPLICABILITY

A display system according to the present invention can be used effectively as a system which is formed by an external terminal device for use to remove a viewing control and a display device.

### REFERENCE SIGNS LIST

- **1**: display system
- **100**: display device
- **101**: display panel
- **102**: front panel
- **201**: back cover
- **202**: level difference portion
- **203**: attachment
- **204**: external terminal device
- **205**: connector
- **206**: guide hole
- **301**: fitting portion
- **302**: external terminal device slot
- **303**: insert guide
- **304**: bridge portion

## Claims

1. A display system comprising a display device (100), an external terminal device (204), and an attachment (203) for attaching the external terminal device (204) to the display device (100),
wherein the display device (100) includes:
a display panel (101); and
a back cover (201) which covers the back surface of the display panel (101) and which includes a connector (205) to which the attachment (203) is inserted substantially parallel to a display screen of the display panel (101), and
the attachment (203) has a U-shape and includes:
a first interface (301) to be connected to the connector (205);
a second interface (302) to be connected to the external terminal device (204); and
a bridge portion (304) which electrically connects the first and second interfaces (301, 302) together and which regulates the positions of the first and second interfaces (301, 302) so that when the external terminal device (204) is attached to the display device (100) via the attachment (203), the external terminal device (204) is located on a different plane from the back cover (201),
wherein the back cover (201) includes a level difference portion (202) which has a surface that intersects with the display screen of the display panel (101) at substantially right angles, and the connector (205) is arranged on that surface.

2. The display system of claim 1, wherein when the external terminal device (204) is attached to the display device (100) via the attachment (203), the first and second interfaces (301, 302) of the attachment (203) are connected to the connector (205) and the external terminal device (204), respectively, substantially parallel to the display screen of the display panel (101).

3. The display system of claim 1, wherein the level difference portion (202) projects perpendicularly to the display screen of the display panel.

4. The display system of claim 1, wherein that surface also intersects with a vertical direction at substantially right angles.

5. The display system of claim 3, wherein the connector (205) has a hole (206) which faces vertically upward.

6. The display system of claim 1, wherein that surface is arranged in the vicinity of the outer periphery of the back cover (201).

7. The display system of claim 1, wherein the back cover (201) defines at least one of the upper, lower and side surfaces of the display device (100), and the connector (205) is arranged on the at least one surface.

8. The display system of claim 1, wherein the first interface (301) includes a terminal to inserted into the connector (205) and at least one guide (303) to locate where to insert the terminal into the connector (205).

9. An attachment for use to attach an external terminal device (204) to a display device (100),
wherein the display device (100) includes: a display panel (101); and a back cover (201) which includes a connector (205), and
the attachment (203) has a U-shape and includes:
a first interface (301) to be connected to the connector (205);
a second interface (302) to be connected to the external terminal device (204); and
a bridge portion (304) which electrically connects the first and second interfaces (301, 302) together and which regulates the positions of the first and second interfaces (301, 302) so that when the external terminal device (204) is attached to the display device (100) via the attachment (203), the external terminal device (204) is located on a different plane from the back cover (201),
wherein the back cover (201) includes a level difference portion (202) which has a surface that intersects with a display screen of the display panel (101) at substantially right angles, and the connector (205) is arranged on that surface.

10. A display device (100) to which an external terminal device (204) is connected via attachment (203),
wherein the attachment (203) has a U-shape and includes:
a first interface (301) connected to the display device (100);
a second interface (302) connected to the external terminal device (204); and
a bridge portion (304) which electrically connects the first and second interfaces (301, 302) together and which regulates the positions of the first and second interfaces (301, 302) so that when the external terminal device (204) is attached to the display device (100) via the attachment (203), the external terminal device (204) is located on a different plane from a back cover (201), and
the display device (100) includes:
a display panel (101); and
the back cover (201) which covers the back surface of the display panel (101) and which includes a connector (205) to which the first interface (301) of the attachment (203) is inserted substantially parallel to a display screen of the display panel (101),
wherein the back cover (201) includes a level difference portion (202) which has a surface that intersects with the display screen of the display panel (101) at substantially right angles, and the connector (205) is arranged on that surface.

## Patentansprüche

1. Anzeigesystem, umfassend eine Anzeigevorrichtung (100), eine externe Anschlussvorrichtung (204), und ein Befestigungselement (203) zum Befestigen der externen Anschlussvorrichtung (204) an der Anzeigevorrichtung (100),
wobei die Anzeigevorrichtung (100) umfasst:
ein Anzeigepaneel (101); und
eine Rückabdeckung (201), die die Rückseite des Anzeigepaneels (101) bedeckt und einen Verbinder (205) umfasst, an dem das Befestigungselement (203) im wesentlichen parallel zu einem Anzeigebildschirm des Anzeigepaneels (101) eingefügt ist, und das Befestigungselement (203) U-förmig ist und umfasst:
eine erste Schnittstelle (301), die mit dem Verbinder (205) zu verbinden ist;
eine zweite Schnittstelle (302), die mit der externen Anschlussvorrichtung (204) zu verbinden ist; und
einen Brückenabschnitt (304), der die erste und die zweite Schnittstelle (301, 302) miteinander elektrisch verbindet und die Positionen der ersten und der zweiten Schnittstelle (301, 302) derart reguliert, dass, wenn die externe Anschlussvorrichtung (204) an der Anzeigevorrichtung (100) über das Befestigungselement (203) angebracht ist, sich die externe Anschlussvorrichtung (204) auf einer anderen Ebene in Bezug auf die Rückabdeckung (201) befindet,
wobei die Rückabdeckung (201) einen Ebenendifferenzabschnitt (202) umfasst, der eine Oberfläche hat, die sich mit dem Anzeigebildschirm des Anzeigepaneels (101) in im wesentlichen rechten Winkeln schneidet, und der Verbinder (205) auf dieser Oberfläche angeordnet ist.

2. Anzeigesystem nach Anspruch 1, bei dem, wenn die externe Anschlussvorrichtung (204) an der Anzeigevorrichtung (100) über das Befestigungselement (203) angebracht ist, die erste und die zweite Schnittstelle (301, 302) des Befestigungselementes (203) mit dem Verbinder (205) bzw. der externen Anschlussvorrichtung (204) im wesentlichen parallel zu dem Anzeigebildschirm des Anzeigepaneels verbunden sind.

3. Anzeigesystem nach Anspruch 1, bei dem der Ebenendifferenzabschnitt (202) senkrecht zu dem Anzeigebildschirm des Anzeigepaneels hervorragt.

4. Anzeigesystem nach Anspruch 1, bei dem sich diese Oberfläche zudem mit einer vertikalen Richtung in im wesentlichen rechten Winkeln schneidet.

5. Anzeigesystem nach Anspruch 3, bei dem der Verbinder (205) ein Loch hat, das vertikal nach oben gewandt ist.

6. Anzeigesystem nach Anspruch 1, bei dem diese Oberfläche in der Nachbarschaft des Außenumfangs der Rückabdeckung (201) angeordnet ist.

7. Anzeigesystem nach Anspruch 1, bei dem die Rückabdeckung (201) wenigstens eine der oberen, unteren und seitlichen Oberflächen der Anzeigevorrichtung (100) bildet und der Verbinder (205) auf der wenigstens einen Oberfläche angeordnet ist.

8. Anzeigesystem nach Anspruch 1, bei dem die erste Schnittstelle (301) einen Anschluss, der in den Verbinder (205) einzufügen ist, und wenigstens eine Führung (303) umfasst um zu bestimmen, wo der Anschluss in den Verbinder (205) einzufügen ist.

9. Befestigungselement für die Befestigung einer externen Anschlussvorrichtung (204) an einer Anzeigevorrichtung (100), wobei die Anzeigevorrichtung (100) umfasst:
ein Anzeigepaneel (101); und
eine Rückabdeckung (201), die einen Verbinder (205) umfasst, und
das Befestigungselement (203) U-förmig ist und umfasst:
eine erste Schnittstelle (301), die mit dem Verbinder (205) zu verbinden ist;
eine zweite Schnittstelle (302), die mit der externen Anschlussvorrichtung (204) zu verbinden ist; und
einen Brückenabschnitt (304), der die erste und die zweite Schnittstelle (301, 302) miteinander elektrisch verbindet und die Positionen der ersten und der zweiten Schnittstelle (301, 302) derart reguliert, dass, wenn die externe Anschlussvorrichtung (204) an der Anzeigevorrichtung (100) über das Befestigungselement (203) angebracht ist, sich die externe Anschlussvorrichtung (204) auf einer anderen Ebene in Bezug auf die Rückabdeckung (201) befindet,
wobei die Rückabdeckung (201) einen Ebenendifferenzabschnitt (202) umfasst, der eine Oberfläche hat, die sich mit dem Anzeigebildschirm des Anzeigepaneels (101) in im wesentlichen rechten Winkeln schneidet, und der Verbinder (205) auf dieser Oberfläche angeordnet ist.

10. Anzeigevorrichtung (100), mit der eine externe Anschlussvorrichtung (204) über ein Verbindungselement (203) verbunden ist,
wobei das Verbindungselement (203) U-förmig ist und umfasst:
eine erste Schnittstelle (301), die mit der Anzeigevorrichtung (100) verbunden ist;
eine zweite Schnittstelle (302), die mit der externen Anschlussvorrichtung (204) verbunden ist; und
einen Brückenabschnitt (304), der die erste und die zweite Schnittstelle (301, 302) miteinander elektrisch verbindet und die Positionen der ersten und der zweiten Schnittstelle (301, 302) derart reguliert, dass, wenn die externe Anschlussvorrichtung (204) an der Anzeigevorrichtung (100) über das Befestigungselement (203) angebracht ist, sich die externe Anschlussvorrichtung (204) auf einer anderen Ebene in Bezug auf eine Rückabdeckung (201) befindet, und
die Anzeigevorrichtung (100) umfasst:
ein Anzeigepaneel (101); und
die Rückabdeckung (201), die die Rückseite des Anzeigepaneels (101) bedeckt und einen Verbinder (205) umfasst, mit dem die erste Schnittstelle (301) des Verbindungselementes (203) im wesentlichen parallel zu einem Anzeigebildschirm des Anzeigepaneels (101) eingefügt ist,
wobei die Rückabdeckung (201) einen Ebenendifferenzabschnitt (202) umfasst, der eine Oberfläche hat, die sich mit dem Anzeigebildschirm des Anzeigepaneels (101) in im wesentlichen rechten Winkeln schneidet, und der Verbinder (205) auf dieser Oberfläche angeordnet ist.

## Revendications

1. Système d'affichage comprenant un dispositif d'affichage (100), un dispositif terminal externe (204), et une fixation (203) pour la fixation du dispositif terminal externe (204) au dispositif d'affichage (100),
dans lequel le dispositif d'affichage (100) inclut :
un panneau d'affichage (101) ; et
un capot arrière (201) qui recouvre la surface arrière du panneau d'affichage (101) et qui comprend un connecteur (205) au niveau duquel la fixation (203) est insérée de manière essentiellement parallèle à un écran d'affichage du panneau d'affichage (101), et
la fixation (203) présente une forme de U et inclut :
une première interface (301) à connecter au connecteur (205) ;
une seconde interface (302) à connecter au dispositif terminal externe (204) ; et
une partie formant pont (304) qui connecte électriquement la première et la seconde interfaces (301, 302) ensemble et qui régule les positions de la première et de la seconde interfaces (301, 302) de sorte que lorsque le dispositif terminal externe (204) est fixé au dispositif d'affichage (100) *via* la fixation (203), le dispositif terminal externe (204) soit localisé sur un plan différent du capot arrière (201),
dans lequel le capot arrière (201) inclut une partie différence de niveau (202) qui présente une surface qui entre en intersection avec l'écran d'affichage du panneau d'affichage (101) sous des angles essentiellement droits, et le connecteur (205) est disposé sur cette surface.

2. Système d'affichage selon la revendication 1, dans lequel lorsque le dispositif terminal externe (204) est fixé au dispositif d'affichage (100) *via* la fixation (203), la première et la seconde interfaces (301, 302) de la fixation (203) sont connectées au connecteur (205) et au dispositif terminal externe (204), respectivement, essentiellement parallèles à l'écran d'affichage du panneau d'affichage (101).

3. Système d'affichage selon la revendication 1, dans lequel la partie différence de niveau (202) se projette perpendiculairement à l'écran d'affichage du panneau d'affichage.

4. Système d'affichage selon la revendication 1, dans lequel cette surface entre également en intersection avec un sens vertical sous des angles essentiellement droits.

5. Système d'affichage selon la revendication 3, dans lequel le connecteur (205) présente un trou (206) qui fait face verticalement vers le haut.

6. Système d'affichage selon la revendication 1, dans lequel cette surface est disposée à proximité de la périphérie externe du capot arrière (201).

7. Système d'affichage selon la revendication 1, dans lequel le capot arrière (201) définit au moins une des surfaces supérieure, inférieure et latérale du dispositif d'affichage (100), et le connecteur (205) est disposé sur la au moins une surface.

8. Système d'affichage selon la revendication 1, dans lequel la première interface (301) inclut un terminal à insérer dans le connecteur (205) et au moins un guide (303) à localiser à l'endroit d'insertion du terminal dans le connecteur (205).

9. Fixation à utiliser pour fixer un dispositif terminal externe (204) au niveau d'un dispositif d'affichage (100),
dans laquelle le dispositif d'affichage (100) inclut : un panneau d'affichage (101) ; et un capot arrière (201) qui inclut un connecteur (205), et
la fixation (203) présente une forme de U et inclut : une première interface (301) à connecter au connecteur (205) ;
une seconde interface (302) à connecter au dispositif terminal externe (204) ; et
une partie formant pont (304) qui connecte électriquement la première et la seconde interfaces (301, 302) ensemble et qui régule les positions de la première et de la seconde interfaces (301, 302) de sorte que lorsque le dispositif terminal externe (204) est fixé au dispositif d'affichage (100) *via* la fixation (203), le dispositif terminal externe (204) soit localisé sur un plan différent du capot arrière (201),
dans laquelle le capot arrière (201) inclut une partie différence de niveau (202) qui présente une surface qui entre en intersection avec un écran d'affichage du panneau d'affichage (101) sous des angles essentiellement droits, et le connecteur (205) est disposé sur cette surface.

10. Dispositif d'affichage (100) auquel un dispositif terminal externe (204) est connecté *via* la fixation (203),
dans lequel la fixation (203) présente une forme de U et inclut : une première interface (301) connectée au dispositif d'affichage (100) ;
une seconde interface (302) connectée au dispositif terminal externe (204) ; et
une partie formant pont (304) qui connecte électriquement la première et la seconde interfaces (301, 302) ensemble et qui régule les positions de la première et de la seconde interfaces (301, 302) de sorte que lorsque le dispositif terminal externe (204) est fixé au dispositif d'affichage (100) *via* la fixation (203), le dispositif terminal externe (204) soit localisé sur un plan différent depuis un capot arrière (201), et
le dispositif d'affichage (100) inclut :
un panneau d'affichage (101) ; et
le capot arrière (201) qui recouvre la surface arrière du panneau d'affichage (101) et qui inclut un connecteur (205) dans lequel la première interface (301) de la fixation (203) est insérée de manière essentiellement parallèle à un écran d'affichage du panneau d'affichage (101),
le capot arrière (201) incluant une partie différence de niveau (202) qui présente une surface qui entre en intersection avec l'écran d'affichage du panneau d'affichage (101) sous des angles essentiellement droits, et le connecteur (205) étant disposé sur cette surface.
